# EUROPÄISCHE PATENTSCHRIFT

(11) **EP 1 354 170 B1**
(45) Veröffentlichungstag und Bekanntmachung des Hinweises auf die Patenterteilung: **11.08.2004**
(21) Anmeldenummer: 02712837.0
(22) Anmeldetag: 23.01.2002
(51) Int. Cl.: F24J 2/05

(54) **KOLLEKTORMODUL**
COLLECTOR MODULE
MODULE COLLECTEUR

(30) Priorität: 23.01.2001 DE 10102825
(43) Veröffentlichungstag der Anmeldung: 22.10.2003
(73) Patentinhaber: Schott Glas, 55122 Mainz (DE)
(72) Erfinder: BRUNOTTE, Martin, 73431 Aalen (DE); HAAS, Gottfried, 95643 Tirschenreuth (DE); QUAST, Klaus, 95666 Mitterteich (DE)
(86) Internationale Anmeldenummer: PCT/EP2002/000644
(87) Internationale Veröffentlichungsnummer: WO 2002/059531

(56) Entgegenhaltungen:
- DE-A- 2 647 045
- DE-A- 3 206 624
- DE-U- 9 116 287
- DE-U- 20 101 139

## Beschreibung

Die Erfindung bezieht sich auf ein Röhrenkollektormodul mit einem Sammelrohr, das mindestens einen Einlauf und einen Auslauf für ein Wärmeträgermedium aufweist, und mit mindestens einem koaxial durchflossenen Kollektorrohr, das ein Hüllrohr, ein Absorberrohr und ein Koaxialrohr aufweist.

Die koaxial durchflossenen Kollektorrohre gehören zu den Kollektorrohren mit direkt durchströmtem Absorber. Diese Kollektorrohre weisen ein Hüllrohr, ein Absorberrohr und ein Koaxialrohr auf. Diese drei Rohre sind ineinander angeordnet, wobei das Hüllrohr zu äußerst, das Absorberrohr exzentrisch oder koaxial zum Hüllrohr und das Koaxialrohr koaxial zum Absorberrohr liegt. Das Hüllrohr und das Absorberrohr sind gegeneinander abgedichtet. In dem Zwischenraum zwischen dem Hüllrohr und dem Absorberrohr befindet sich entweder Vakuum oder ein Edelgas. Dies dient vor allem der Isolierung des Absorberrohres gegenüber der Umgebung. Das Absorberrohr ist mit einem Absorber beschichtet, um die Sonnenwärme aufzunehmen. Um diese Wärme weiterzutransportieren, wird der Absorber von einem Wärmeträgermedium durchflossen. Bei koaxial durchflossenen Kollektorrohren wird das Wärmeträgermedium durch ein Koaxialrohr eingeleitet. Hierbei handelt es sich um ein beidseitig offenes Rohr, das durch eines der beiden Rohrenden des Absorberrohres in dieses eintritt. Das andere Ende des Absorberrohres ist geschlossen. Das nicht in das Absorberrohr hineinragende Ende des Koaxialrohres steht mit dem Einlauf des Sammelrohres in Verbindung. Das Wärmeträgermedium fließt durch den Einlauf in das Koaxialrohr und von dort durch das Absorberrohr wieder zurück zum Auslauf. Von dem Auslauf des Sammelrohres wird das Wärmeträgermedium zu einem Wärmeaustauscher geleitet, wo es die Wärme an den Speicher abgibt.

Auf dem Markt sind verschiedene koaxial durchflossene Röhrenkollektoren erhältlich. Ein weit verbreiteter Röhrenkollektor weist getrennte Leitungen für den Ein- und den Auslauf des Sammelrohres auf. Als Einlauf und Auslauf werden flexible Wellrohre verwendet. Das Absorberrohr und das Koaxialrohr sind über Klemmringverschraubungen mit den Einläufen und Ausläufen verbunden. Diese Art der Montierung ist sehr aufwendig und relativ kostenintensiv. Die Verwendung von getrennten Leitungen für Einlauf und Auslauf zieht außerdem einen erhöhten Platzbedarf nach sich. Bei der Verwendung von flexiblen Wellrohren muss außerdem noch ein Gehäuse für die Sammelanlage vorgesehen werden.

Die oben beschriebenen Röhrenkollektoren sind in der Regel als Module aus mehreren Kollektorrohren, die an einen gemeinsamen Ein- bzw. Auslauf angeschlossen sind, gebaut. Die einzelnen Röhrenkollektormodule lassen sich über Doppel-O-Ring-Steckverbindungen miteinander kombinieren.

Bei einem weiteren marktgängigen koaxial durchströmten Röhrenkollektor ist auch das Sammelrohr koaxial durchströmt. Sowohl das Absorber- und das Koaxialrohr als auch das äußere Koaxialrohr des Sammelrohres sind dabei als Ganzes einstückig ausgeführt. Dies hat zwar den Vorteil, dass nur das Hüllrohr gegen das Absorberrohr abgedichtet werden muss. Die Herstellung dieser Röhrenkollektoren ist aber sehr aufwendig.

Ein weiterer koaxial durchflossener Röhrenkollektor wird in der DE 298 08 532 U1 beschrieben. Dort ist das Sammelrohr als Sammelkastenanordnung ausgebildet. Der Einlauf und der Auslauf sind als zwei parallel verlaufende, einstückig ausgebildete Kanäle beschrieben, die nur durch eine Wand getrennt werden, die jeweilige Öffnung für die einzelnen Koaxialrohre aufweist. Das Koaxialrohr wird in die Öffnungen in die Trennwand gesteckt, das Absorberrohr wird von einer Öffnung in der Seitenwand des Sammelkastens aufgenommen, die mit dem Auslaufkanal in Verbindung steht, und das Hüllrohr wird in einer Verlängerung des Gehäuses aufgenommen. Alle drei Rohre werden durch Klebstoff mit den Gehäuseteilen bzw. Sammelkastenteilen verbunden. Dadurch wird zwar eine kompaktere Bauweise erreicht. Die Dichtung, die durch den Klebstoff erreicht werden kann, hat sich aber bei hoher Wärmebelastung als unzureichend erwiesen.

Die DE 299 08 190 U1 beschreibt ein spezielles Klemmsystem für Sonnenkollektoren. Die Vakuumröhren und die Röhren des Wärmeträgerkreislaufs kreuzen sich zur Wärmeübertragung berührend unter einem Winkel von 90°, wobei die sich kreuzenden Röhren mittels einem Klemmsystem aus zwei Backen, deren Klemmbacken von einem Spannmechanismus vorspannbar sind, formschlüssig miteinander verbunden werden.

Die DE 297 10 494 U1 offenbart einen Sonnenkollektor mit Wärmerohr, das die Wärme durch Verdampfen und Kondensieren einer Wärmeleitflüssigkeit überträgt. Um eine Überhitzung zu vermeiden ist eine Verschlusseinrichtung aus Bimetall vorgesehen, die bei Überschreiten einer Schwellentemperatur den Fluss der Wärmeleitflüssigkeit vom Kondensator zum Verdampfer einschränkt.

In der DE 32 06 624 A1 handelt es sich um einen Sonnenenergiekollektor auf der Basis eines Luft-Wasser-Wärmetauschers, bei dem mehrere Kollektorelemente strömungstechnisch zusammengeschaltet sind. Zur Verbesserung des Luftumlaufs ist ein Gebläse vorgesehen.

Die WO 83/3891 offenbart einen Röhrensonnenkollektor ohne Koaxialrohre in den Absorberrohren, die gegenüber einem Sammelrohr nach unten geneigt sind. Die Absorberrohre sind gegenüber dem Sammelrohr mittels O-Ringen abgedichtet.

Vor diesem Hintergrund ist es Aufgabe der vorliegenden Erfindung, ein Röhrenkollektormodul bereitzustellen, das die Vorteile einer einfachen Montage als auch einer guten Dichtung in sich vereint.

Diese Aufgabe wird durch ein Röhrenkollektormodul gemäß Anspruch 1 gelöst.

Das erfindungsgemäße Röhrenkollektormodul lässt sich sehr einfach montieren. Für den Fall, dass das Koaxialrohr nicht fest mit dem Absorberrohr und dem Hüllrohr verbunden ist, wird das Koaxialrohr zunächst durch den Nippel in das Aufnahmeelement des Einlaufes eingeführt. Danach wird in das Absorberrohr ein elastisches Element in das der Sammelanlage abgewandte Ende eingeführt. Das Absorberrohr wird nun über das Koaxialrohr und über den Nippel der Sammelanlage gesteckt.

Mittels des Dichtelementes zwischen dem Nippel und dem Absorberrohr kann kein Wärmeträgermedium zwischen dem Nippel und dem Absorberrohr entweichen. Das elastische Element, das in dem Absorberrohr angeordnet ist, drückt seinerseits das Koaxialrohr in das Aufnahmeelement des Einlaufes. Das Wärmeträgermedium kann nun von dem Einlauf in das Koaxialrohr fließen, am entgegengesetzten Ende des Koaxialrohres in das Absorberrohr fließen und zurück zwischen dem Nippel und dem Koaxialrohr hindurch in den Auslauf hinein.

Falls das Hüllrohr nicht mit dem Absorberrohr verbunden ist, wird es nachträglich über das Absorberrohr gestülpt, falls das Absorberrohr und das Hüllrohr miteinander fest verbunden sind, werden Absorber und Hüllrohr gleichzeitig über das Koaxialrohr und den Nippel gestülpt.

Um auch bei hoher Dichtleistung des elastischen Elementes ein ungestörtes Strömen des Wärmeträgermedium gewährleisten zu können, ist vorteilhafterweise das elastische Element als Spiralfeder ausgebildet.

Vorteilhafterweise ist das Dichtelement zwischen Nippel und Absorberrohr als mindestens ein O-Ring ausgebildet. Man erhält damit nicht nur die beste Dichtleistung, sondern O-Ringe sind auch preisgünstig und einfach zu montieren. Durch die Wahl eines geeigneten Kunststoffes ist es außerdem möglich, die Standzeit trotz der Wärmebelastung bei Dauerbetrieb zu optimieren.

Vorteilhafterweise sind das mindestens eine Absorberrohr und das mindestens eine Hüllrohr einstückig ausgebildet. Dies hat den Vorteil, dass das Vakuum oder die Edelgasatmosphäre, die zwischen Absorberrohr und Hüllrohr herrscht, um eine gute Funktionsweise des Sonnenkollektors zu gewährleisten, nicht durch beispielsweise undichte Stellen an der Verbindung von Absorberrohr zu Hüllrohr nachträglich beeinträchtigt wird.

Das Kollektorrohr stellt das für das Sonnenlicht durchlässige Hüllrohr dar. Es besteht aus einem transparenten Material. Es ist zwar im allgemeinen ein Material mit geringer Wärmeleitfähigkeit, jedoch ist diese Eigenschaft nicht entscheidend, da das Rohr sich bestimmungsgemäß nicht stark aufheizt. Vorzugsweise besteht das Hüllrohr aus Glas. Bevorzugt ist ein eisenarmes Glas (Kalknatriumglas oder Borosilkatglas) mit hoher solarer Transmission und geringen Herstellungskosten, wie es z.B. als Primärpackmittel für pharmazeutische Erzeugnisse verwendet wird. Das Hüllrohr kann auch aus einem transparenten Kunststoff, beispielsweise aus Polymethylmetacrylat (PMMA), bestehen. Glas weist gegenüber Kunststoff die Vorteile einer höheren Diffusionsfestigkeit und einer höheren UV-Stabilität auf, dagegen ist Kunststoff gegenüber Glas bruchsicherer und einfacher zu handhaben. Das Hüllrohr ist in den meisten Ausführungsformen mit einem Reflektor versehen.

Das Absorberrohr besteht aus einem Material mit hoher Temperaturbeständigkeit (bis wenigstens 250° C) und geringer Wärmeleitfähigkeit. Unter Materialien mit einer geringer Wärmeleitfähigkeit werden hier Materialien verstanden, die eine spezifische Wärmeleitfähigkeit von ≤ 2 J/msK besitzen. Vorzugsweise besteht das Absorberrohr aus Glas, vorzugsweise aus Borosilikatglas. Es kann auch aus einem temperaturstabilen Kunststoff bestehen. Es ist mit einem Absorber versehen.

Vorzugsweise sind sowohl das mindestens eine Absorberrohr als auch das mindestens eine Hüllrohr aus Glas. Das Absorberrohr und das Hüllrohr sind dabei vorteilhafterweise exzentrisch zueinander verschmolzen. An der Verschmelzstelle werden zur Reduzierung von Spannung im Glas große Radien ausgeformt.

In einer bevorzugten Ausführungsform ist die Sammelanlage als Sammelrohr ausgebildet, das mindestens eine Verteilerplatte aufweist, die in Längsrichtung im Sammelrohr angeordnet ist, so dass das Sammelrohr in mindestens eine Einlaufkammer und mindestens eine Auslaufkammer geteilt wird. In der Verteilerplatte ist das Aufnahmeelement für das Koaxialrohr der Einlaufkammer angeordnet. Durch die Ausführungen der Sammelanlage als Einrohrsystem wird für jedes angeschlossene Kollektorrohr nur jeweils eine Verbindungsstelle benötigt. Außerdem ist der Platzbedarf eines einzigen Sammelrohres geringer und die Montage weniger aufwendig.

Vorzugsweise ist die Verteilerplatte aus Metall. Durch die Federkraft des elastischen Elements wird das metallische Verteilerblech zusätzlich an das Koaxialrohr angedrückt. Bei sprunghaftem Druckanstieg (z.B. bedingt durch Dampfschlag) wird das Verteilerblech über die Gegenkraft der Druckfeder ausgelenkt. Dadurch entsteht ein Spalt zwischen Verteilerblech und Sammelrohr längs der Rohrachse, wodurch ein Druckausgleich zwischen Einlauf- und Auslaufkammer ermöglicht wird.

Der eben geschilderte Effekt wird vorteilhafterweise durch eine geeignete Befestigung der Verteilerplatte im Sammelrohr verstärkt, beispielsweise indem die Verteilerplatte nur über zwei gegenüberliegende Kanten mit dem Sammelrohr verbunden ist, vorzugsweise die in axialer Richtung des Sammelrohres entgegengesetzten Kanten der Verteilerplatte.

Vorteilhafterweise weist die Verteilerplatte mindestens eine Klappe auf, die, wenn sie offen ist, die mindestens eine Einlauf- und die mindestens eine Auslaufkammer verbindet und, wenn sie geschlossen ist, die mindestens eine Einlauf- und die mindestens eine Auslaufkammer trennt. Durch eine derartige Klappe am Verteilerblech, die erst durch die Strömung des Wärmeträgermediums an das Sammelrohr gedrückt wird, wird eine schnelle Entlüftung des Gesamtsystems ermöglicht. Vor Kollektorstart ermöglicht die Klappe am Verteilerblech eine Konvektion zwischen Koaxialrohr und Absorberrohr. Dadurch wird der Wärmetransport in dem Kollektorsammelrohr verbessert.

In einer weiteren bevorzugten Ausführungsform wird die Verteilerplatte durch ein im Sammelrohr angeordnetes Innenrohr ersetzt. Das Innenrohr bildet dabei die Einlaufkammer und das Volumen zwischen dem Innenrohr und dem Sammelrohr bildet die Auslaufkammer.

Einerseits kann das Innenrohr zylindrisch ausgebildet sein, wobei dessen in Einlaufströmungsrichtung hinteres Ende geschlossen ist. Dieser Verschluss kann beispielsweise durch Löten oder eine andere Befestigungsart befestigte Scheibe oder Kappe sein. An seinem offenen Ende hingegen ist das Innenrohr mittels eines Dichtrings gegen das Sammelrohr abgedichtet. Zur besseren Stabilisierung kann das Innenrohr zusätzlich an seinem geschlossenen Ende relativ zum Sammelrohr mittels eines durchbrochenen Rings zentriert sein. Die Durchbrechungen im Zentrierring dienen dazu, das Wärmeträgermedium abströmen zu lassen.

Andererseits kann das Innenrohr im wesentlichen zylindrisch ausgebildet sein, wobei dessen in Einlaufströmungsrichtung hinteres Ende langsam zusammenläuft, so dass dieses Ende geschlossen ist. Dies kann beispielsweise durch eine Verquetschung des Innenrohrs bewerkstelligt werden. An seinem offenen Ende wäre ein solches Innenrohr mittels einer kegelartigen Passung gegen das Sammelrohr abgedichtet.

Als besonders vorteilhaft hat es sich herausgestellt, das mindestens eine Element zur Aufnahme des Koaxialrohres entweder als Bohrung mit gewölbter Senkung oder als geöffneten Napf auszubilden. Derart ausgebildete Aufnahmeelemente dienen sowohl zur Führung des Koaxialrohres als auch zur Abdichtung.

Um bei Inbetriebnahme des Röhrenkollektormoduls das Röhrenkollektormodul schneller entlüften zu können, weist das Innenrohr an seinem geschlossenen Ende vorteilhafterweise eine kleine Öffnung auf.

Vorteilhafterweise weist das Röhrenkollektormodul ein Gehäuse auf, in dem sowohl die Sammelanlage als auch zum Teil das mindestens eine Kollektorrohr untergebracht sind. Das Gehäuse dient dazu, das Röhrenkollektormodul als Ganzes mechanisch zu stabilisieren. Es ist von Vorteil, wenn dabei das Hüllrohr mit dem Gehäuse verbunden ist. Die Verbindung kann formschlüssig ausgeführt sein, indem in dem Hüllrohr eine Sicke in dem Gehäuse angebracht ist und entweder eine Wulst in dem Gehäuse oder eine O-Ringnut mit O-Ringen vorgesehen sind. Auch kraftschlüssige Verbindungen sind möglich, die beispielsweise als O-Ring am Hüllrohr und O-Ringnut in der Wandung des Gehäuses ausgeführt sein können.

Eine weitere Möglichkeit, das Hüllrohr mit dem Gehäuse zu verbinden, besteht darin, um das Hüllrohr Clips, Sicherungsringe und/oder Sicherungsbalken anzubringen, die gleichzeitig im Gehäuse eingelassen sind. Als zusätzliche Sicherheit kann außerdem ein Bügel um die Sammelanlage, insbesondere in seiner Ausführungsform als Sammelrohr gelegt werden und am Sicherheitsbalken dieser Bügel befestigt werden. Diese Sicherungselemente nehmen die Kräfte auf, die beispielsweise durch den im System herrschenden Überdruck oder die thermischen Längenänderungen der einzelnen Komponenten auftreten können.

Bei Röhrenkollektormodulen mit mehr als einem Kollektorrohr sind die einzelnen Kollektorrohre vorzugsweise parallel miteinander verschaltet, indem alle Kollektorrohre aus dem gleichen Einlauf mit Wärmeträgermedium gespeist werden und aus allen Kollektorrohren das Wärmeträgermedium in den gleichen Auslauf abläuft. Einzelne Röhrenkollektormodule können seriell miteinander verschaltet werden.

Die Röhrenkollektormodule können über ein direkt an der Sammelanlage angebrachtes Stecksystem miteinander verbunden werden. Besonders bevorzugt werden Doppel-O-Ringsysteme. Vorteilhaft kann es auch sein, zusätzlich eine Klammer um die Verbindung zu legen.

Der Gegenstand der Erfindung soll anhand der nun folgenden Zeichnungen beispielhaft erläutert werden. Dazu zeigen:
- Figur 1: einen Schnitt in der Strömungsebene durch ein Röhrenkollektormodul;
- Figur 2a-2g: Schnitte senkrecht zur Strömungsebene durch verschiedene Ausführungsformen eines Röhrenkollektormoduls;
- Figur 3: eine mögliche Verbindung des Hüllrohres mit dem Gehäuse;
- Fign. 4a, 4b: die strömungstechnische Verschaltung von Kollektorrohren in einem Röhrenkollektormodul mit Hilfe von Verteilerplatten;
- Fign. 5a,b: die Verschaltung von mehreren Röhrenkollektormodulen.

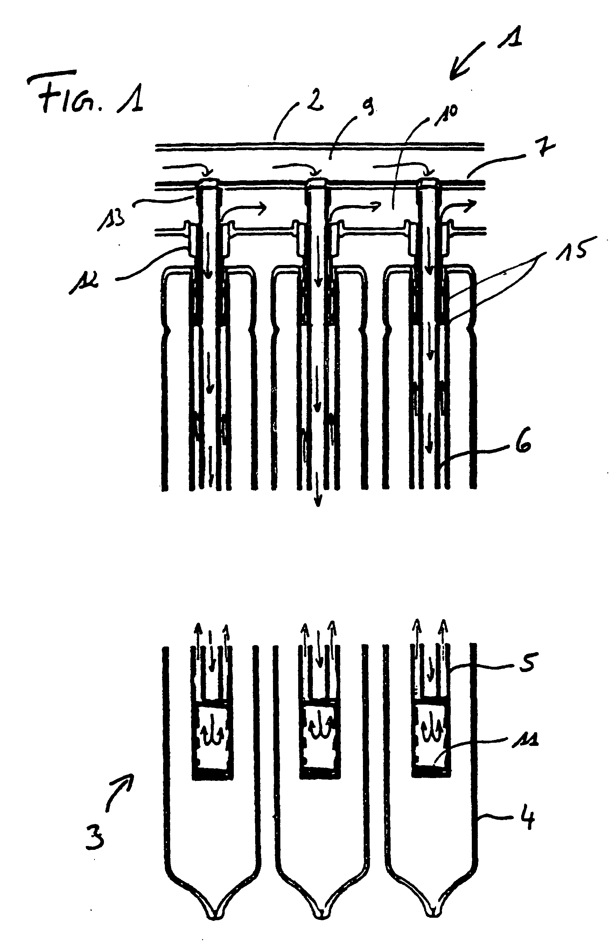

Figur 1 zeigt ein Röhrenkollektormodul 1 mit Kollektorrohren 3. Das Wärmeträgermedium strömt durch die Einlaufkammer 9 in die Koaxialrohre 6 der einzelnen Kollektorrohre 3 ein, durchströmt jedes Koaxialrohr 6 bis an sein der Einlaufkammer 9 entgegengesetztes Ende, wo es aus dem Koaxialrohr 6 austritt und durch das Absorberrohr 5 eines jeden Kollektorrohres 3 in die Auslaufkammer 10 zurückströmt, die parallel zur Einlaufkammer 9 angeordnet ist. Von dort wird das Wärmeträgermedium einer Vorrichtung zur Umsetzung der Wärme in Energie oder einem Wärmespeicher zugeführt.

Die Einlaufkammer 9 und die Auslaufkammer 10 werden von einem Sammelrohr 2 gebildet, das durch eine Verteilerplatte 7 in zwei Hälften, nämlich die Einlaufkammer 9 und die Auslaufkammer 10 aufgeteilt wird. Die Verteilerplatte 7 weist Öffnungen mit Nieten 13 zur Aufnahme der Koaxialrohre 6 auf. Die Koaxialrohre 6 werden in die Nieten 13 gesteckt und durch Federn 11, die in den Absorberrohren 5 an dem dem Sammelrohr 2 entgegengesetzten Ende angeordnet sind gegen die Nieten 13 und die Verteilerplatte 7 gedrückt, so dass sich eine abdichtende Funktion ergibt.

Das Absorberrohr 5 ist mit dem Hüllrohr 4 einstückig aus Glas ausgebildet. Die Einheit aus Absorberrohr 5 und Hüllrohr 4 wird über Nippel 12, die in dem Sammelrohr 2 vorgesehen sind und jeweils zwei O-Ringe 15 aufweisen, dichtend verbunden. Das Wärmeträgermedium kann durch den Zwischenraum zwischen Innenwand des Nippels 12 und der Außenwand des Koaxialrohres 6 in die Auslaufkammer 10 strömen.

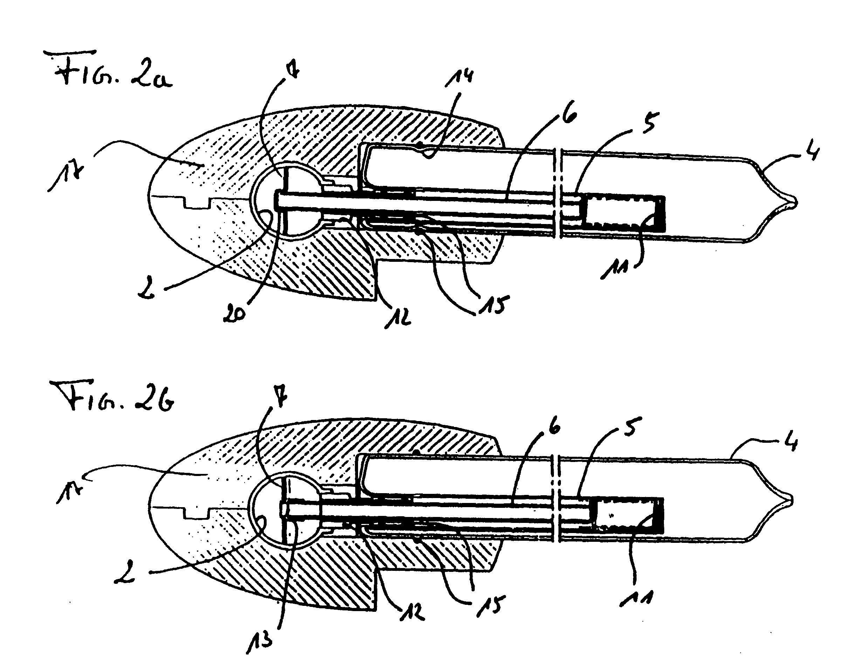

In den Figuren 2a bis g sind Schnitte senkrecht zur Strömungsebene des Wärmeträgermediums durch verschiedene Ausführungsformen des Röhrenkollektormoduls an der Stelle eines Kollektorrohres dargestellt. Bei allen sieben Ausführungsformen werden die Einlauf- und Auslaufkammern von einem Sammelrohr 2 gebildet, das mittels einer Verteilerplatte 7 oder ein Innenrohr 21 in Längsrichtung in zwei Kammern geteilt wird. Um das Sammelrohr 2 ist ein zweiteilig ausgeführtes Gehäuse 17 angeordnet. Das Gehäuse umgreift auch das dem Sammelrohr zugewandte Ende des Hüllrohres 4.

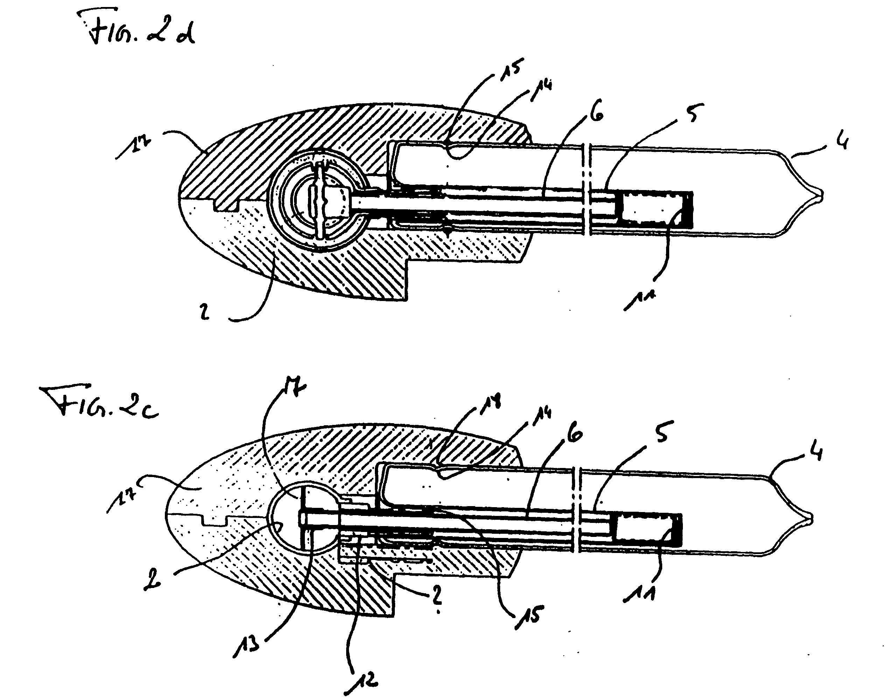

In den Figuren 2a und 2d ist das Hüllrohr 4 formschlüssig mit dem Gehäuse 17 verbunden, indem das Hüllrohr eine Sicke und das Gehäuse 17 eine O-Ringnut aufweist. Zwischen der Sicke 14 und der O-Ringnut ist ein abdichtender O-Ring 15 angeordnet. In der Figur 2c ist das Hüllrohr 4 ebenfalls formschlüssig mit dem Gehäuse 17 verbunden. Das Hüllrohr 4 weist eine Sicke 14 auf und das Gehäuse 17 eine entsprechende Wulst 18. Die Verbindung zwischen Hüllrohr 4 und Gehäuse 17 kann auch, wie in Figur 2b dargestellt, kraftschlüssig ausgebildet sein. Dazu ist in einer O-Ringnut im Gehäuse 17 ein O-Ring 15 angeordnet, ohne dass in dem Hüllrohr 4 eine Sicke vorgesehen wäre.

In den in den Fign. 2e bis g gezeigten Ausführungsformen wurde eine andere Art der Befestigung des Hüllrohres 4 mit dem Gehäuse 17 bzw. dem Sammelrohr 2 gewählt. In die Sicke 14 des Hüllrohres 4 wird ein Clip 25 eingelegt. Der Clip 25 wird durch den Sicherungsring 24 am Aufgehen gehindert. Auf der dem Sammelrohr 2 abgewandten Seite ist der Clip 25 mit einer Schulter 26 versehen. Das Hüllrohr 4 wird mit dem Clip 25 und dem Sicherungsring 24 in den Balken 27 eingeschoben. Mit der Schulter 26 stützt sich das gesamte System am Balken 27 ab. Die Bohrungen im Balken 27 sind so dimensioniert, dass das Hüllrohr 4 bei thermischer Ausdehnung des Sammelrohrs 2 genügend Bewegungsfreiraum hat. Dadurch werden die Lageänderungen kompensiert, die durch die Längenänderung insbesondere des Sammelrohres 2 erfolgen können.

Durch den außerdem im System herrschenden Überdruck werden Auszugskräfte zwischen dem Sammelrohr 2 und dem Kollektorrohr aus dem Hüllrohr 4, dem Absorberrohr 5 und dem Koaxialrohr 6 hervorgerufen. Um diese Auszugskräfte abzufangen, wird der Balken 27 mit Hilfe des Bügels 28 (s. Fig. 2g) am Sammelrohr 2 fixiert. Dazu wird der Bügel 28 mit Hilfe von Muttern 30 am Balken 27 befestigt. Das so montierte Röhrenkollektormodul kann dann in die Isolierschalen 22 gelegt werden, die zusammen mit der Gehäuseaußenwand 23 das Gehäuse 17 bilden.

Ein besonderer Vorteil dieser Befestigungsweise besteht darin, dass die einzelnen Komponenten in allen Richtungen Bewegungsfreiheit haben, was eine spannungsfreie Montage der Röhrenkollektormodule auf einem Dach ermöglicht. Alle Ausführungsformen 2a bis g weisen den Vorteil auf, dass einzelne Kollektorrohre bei bereits montierten Anlagen leicht austauschbar sind.

Die Abdichtung des Absorberrohres ist in allen sieben Ausführungsformen über einen an das Sammelrohr 2 gelöteten Nippel 12 mit zwei O-Ringen 15 gewährleistet, über die das Absorberrohr gestülpt wird. Das in dem Absorberrohr 5 angeordnete Koaxialrohr 6 wird bei den in Fig. 2a-d dargestellten Ausführungsformen entweder von in der Verteilerplatte 7 angeordneten Nieten 13 aufgenommen oder von Aufnahmeelementen 20, die durch Tiefziehen der Verteilerplatte 7 hergestellt werden, wenn diese aus Metall ist, gewährleistet. Zum Abdichten und zur Fixierung des Koaxialrohres in der Verteilerplatte 7 bzw. dem Aufnahmeelement 20 oder der Niete 13 wird das Koaxialrohr 6 durch eine im Absorberrohr 5 an dem den Sammelrohr 2 entgegengesetzten Ende angeordneten Feder gegen das Aufnahmeelement 20 oder die Niete 13 gedrückt. Auch im Falle der Ausführung der Verteilerplatte aus Kunststoff, wie in Figur 2d dargestellt, wird über die Feder 11 das Koaxialrohr 6 gegen das in der Verteilerplatte ausgebildete Aufnahmeelement gedrückt.

Bei den in den Fign. 2e bis g dargestellten Varianten mit Innenrohr 21 ist das Element 20 zur Aufnahme des Koaxialrohres 6 entweder als Napf mit durchbrochenem Boden wie in Fig. 2e oder einfach als Bohrung mit gewölbter oder schräger Senkung wie in Fig. 2f,g ausgeführt. Dadurch wird das Koaxialrohr 6 zum einen geführt und zum anderen abgedichtet.

Bei allen sieben in den Figuren 2a bis 2g dargestellten Ausführungsform steht im Vordergrund, dass die einzelnen Bestandteile des Röhrenkollektormoduls durch einfaches Aufeinanderstecken miteinander dicht verbunden werden können.

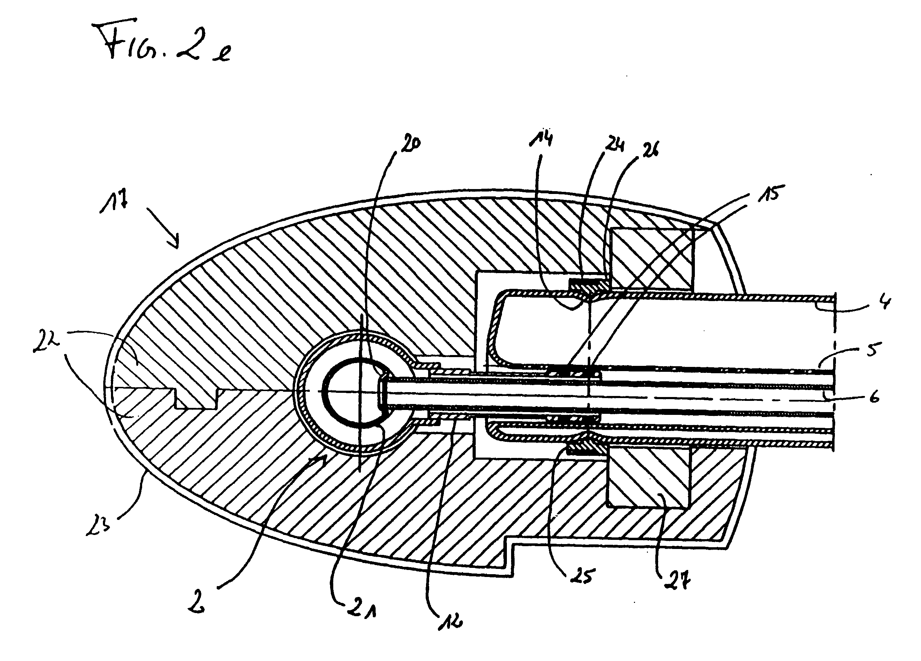

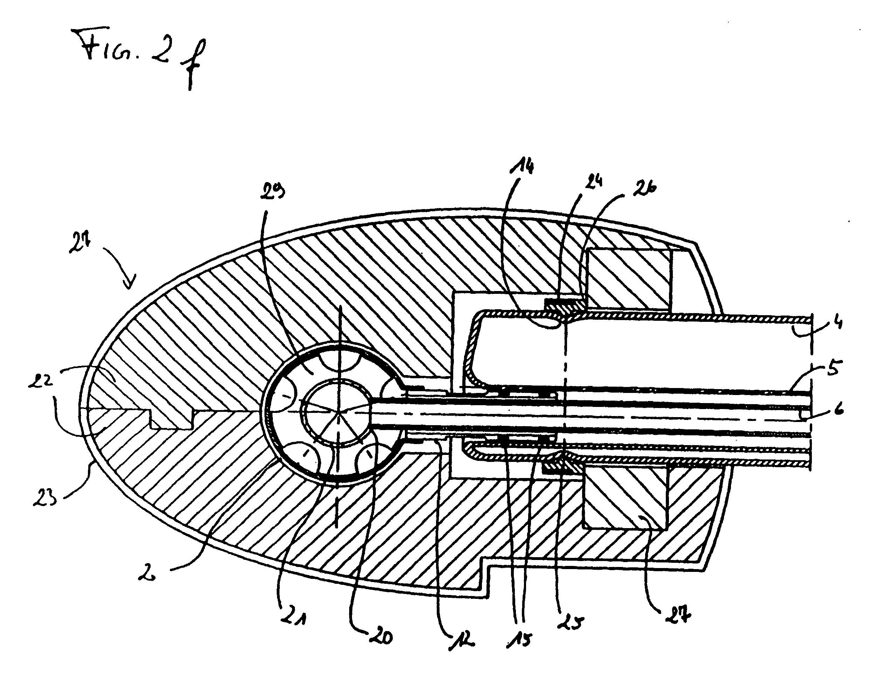

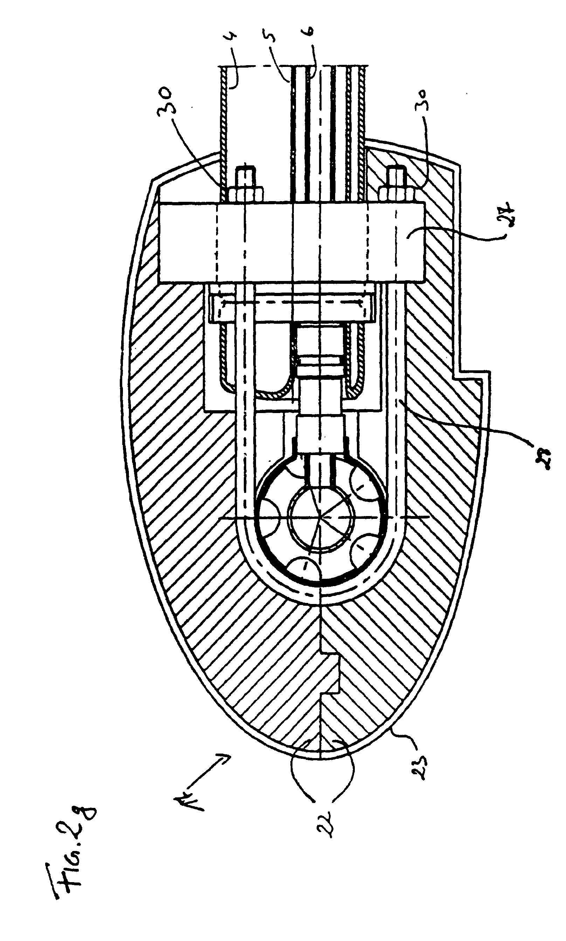

In Figur 3 ist nochmals illustriert, wie die Verbindung zwischen Hüllrohr 4 und Gehäuse 17 formschlüssig ausgebildet werden kann. Der Formschluss wird durch den Wulst 18, der in die Sicke 14 im Hüllrohr 4 eingreift, bewerkstelligt. Für die Außendichtung hingegen sind im Gehäuse 17 Nuten 16 zur Aufnahme von O-Ringen 15 vorgesehen. Diese O-Ringe 15 drücken gegen die Außenwandung des Hüllrohres 4 und führen dadurch zu einer Abdichtung zwischen Gehäuse 17 und Hüllrohr 4.

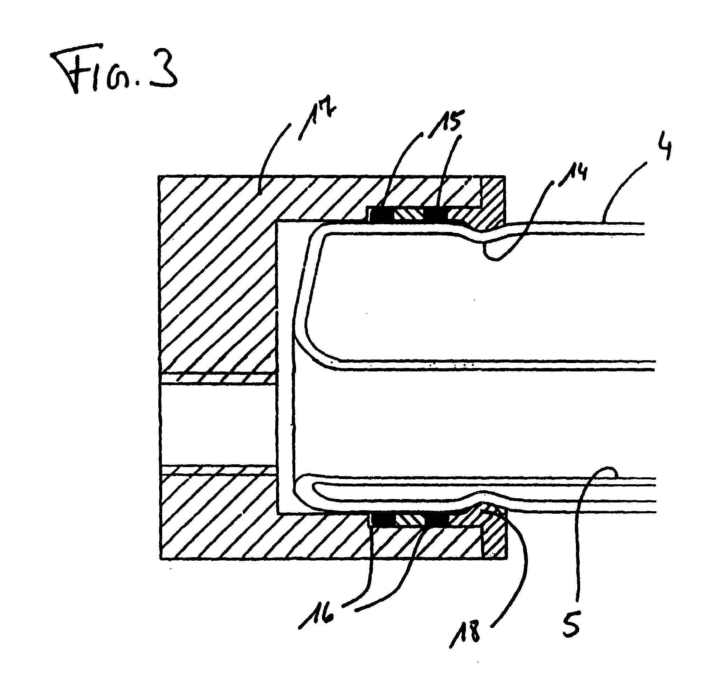

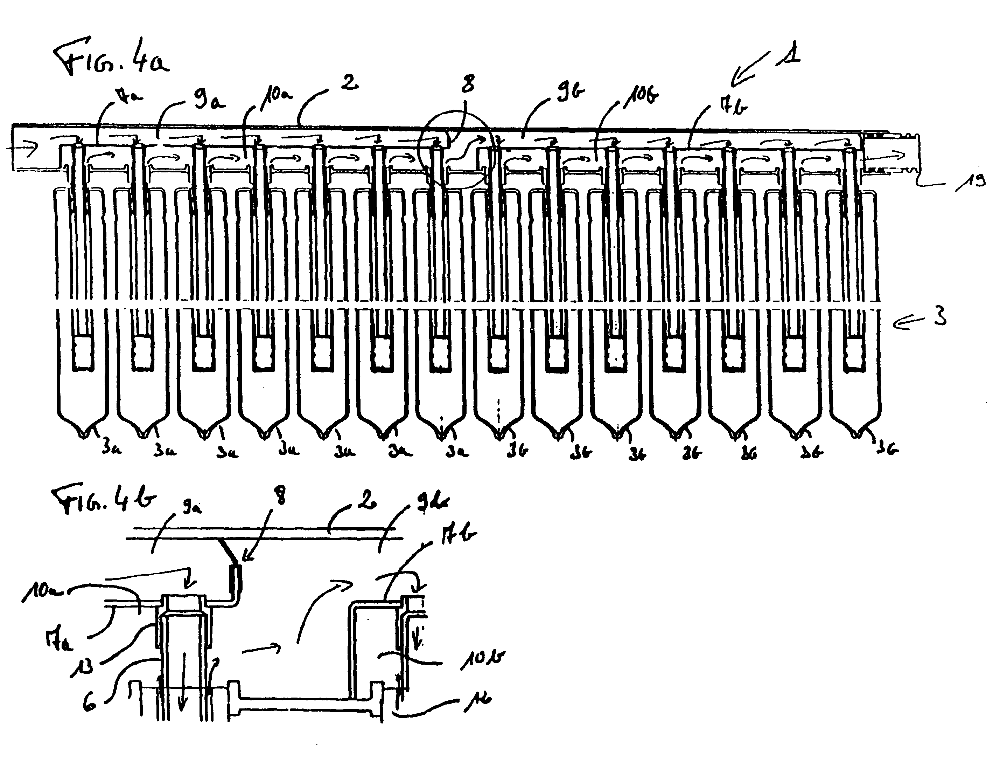

In der Figur 4a ist ein Röhrenkollektormodul 1 dargestellt, das vierzehn Kollektorrohre 3a, b aufweist. Die Einlaufkammern 9a, b und Auslaufkammern 10a, b werden durch ein Sammelrohr 2 gebildet, dass durch zwei Verteilerplatten 7a und 7b in die verschiedenen Kammern aufgeteilt wird.

Durch die in Strömungsrichtung des Wärmeträgermediums erste Einlaufkammer 9a werden die ersten sieben Kollektorrohre 3a mit Wärmeträgermedium gespeist. Aus allen sieben Kollektorrohren 3a fließt das Wärmeträgermedium über die Auslaufkammer 10a ab. Die ersten sieben Kollektorrohre 3a sind also parallel miteinander verschaltet.

Die Auslaufkammer 10a mündet in die zweite Einlaufkammer 9b. Über die Einlaufkammer 9b werden die restlichen sieben Kollektorrohre 3b mit Wärmeträgermedium gespeist. Das Wärmeträgermedium läuft aus allen diesen sieben Kollektorrohren 3b durch die Auslaufkammer 10b ab. Über den Steckverbinder 19 wird das Wärmeträgermedium zur weiteren Nutzung der Wärme abgeführt.

Bei dem in Figur 4a dargestellten Röhrenkollektormodul 1 sind also jeweils sieben Kollektorrohre miteinander parallel zu Einheiten 7a und 7b verschaltet und diese Einheiten sind wiederum untereinander seriell verschaltet. Dadurch lässt sich eine effizientere Nutzung der Wärme erreichen, da das Wärmeträgermedium, das in die zweite Einheit 7b aus den Kollektorrohren 3b einströmt, bereits durch den Durchlauf durch die erste Einheit 7a von sieben Kollektorrohren 3a vorgewärmt wurde.

Die Einlaufkammer 9a wird von der Einlaufkammer 9b durch eine Klappe 8 getrennt. Dies ist vergrößert in der Figur 4b dargestellt. Die Klappe 8 ist derart im Sammelrohr 2 angeordnet, dass sie von dem strömenden Wärmeträgermedium gegen das Sammelrohr 2 gedrückt wird und damit die Einlaufkammer 9a dicht von der Einlaufkammer 9b trennt. Beim Befüllen des Röhrenkollektormoduls 1 öffnet sich die Klappe 8, so dass ein schnelleres Entlüften des gesamten Röhrenkollektormoduls 1 ermöglicht wird.

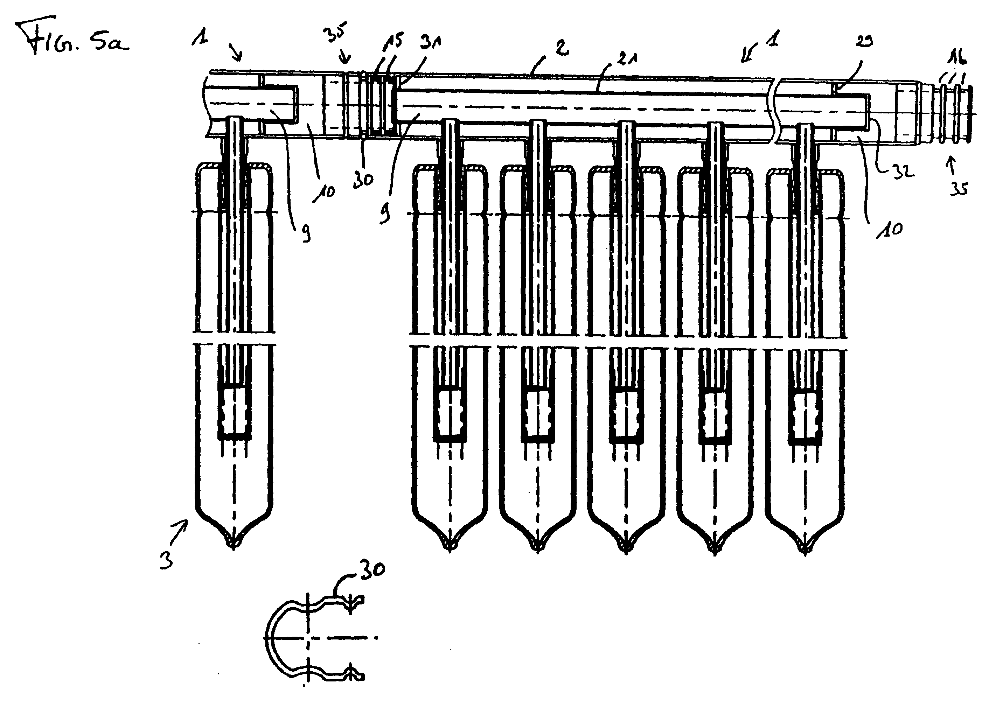

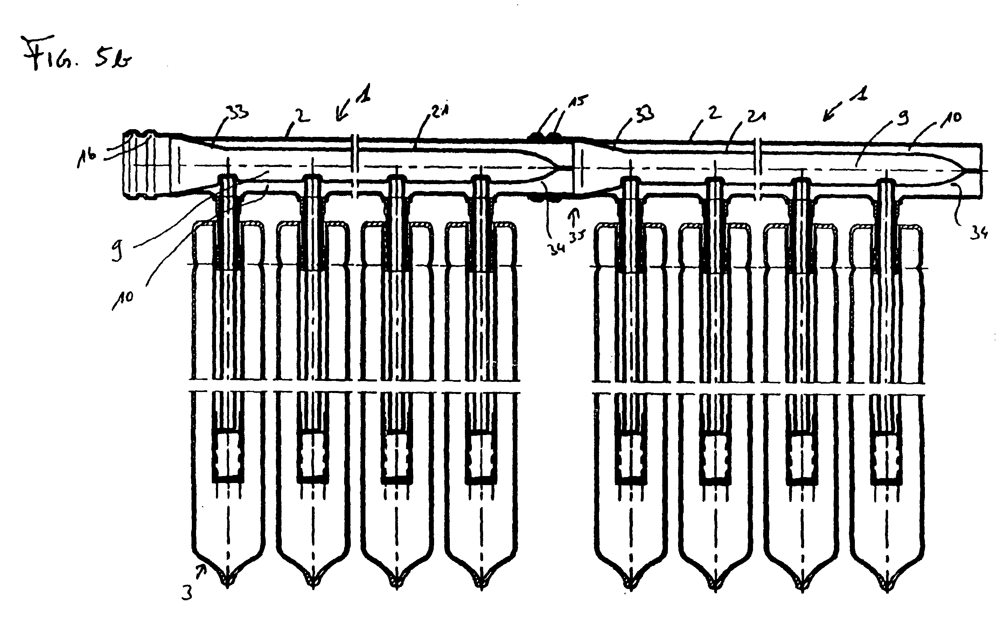

In Fig. 5a sind Röhrenkollektormodule 1 dargestellt, bei denen die Sammelanlage als Sammelrohr 2 und Innenrohr 21 ausgebildet sind. Das Innere des Innenrohres 21 bildet die Einlaufkammer 9, der Zwischenraum zwischen dem Innenrohr 21 und dem Sammelrohr 2 bildet die Auslaufkammer 10. Die Einlaufkammer 9 ist gegenüber der Ablaufkammer 10 über den Dichtungsring 31 sowie die Lötkappe 32 abgedichtet. Zur mechanischen Stabilisierung des Innenrohres 21 ist außerdem ein Zentrierring 29 am mit der Lötkappe 32 bedeckten Ende des Innenrohres 21 vorgesehen. Der Zentrierring 29 weist Durchbrechungen auf, damit das Wärmeträgermedium ungestört in der Auslaufkammer 10 strömen kann. Röhrenkollektormodule 1 lassen sich über die Verbindungselemente 35 miteinander verbinden. Das in Fig. 5a dargestellte Verbindungselement 35 ist fest mit dem Sammelrohr 2 des einen Röhrenkollektormoduls 1 verbunden. Jedes Verbindungselement 35 weist drei Nuten 16, von denen zwei jeweils einen O-Ring 15 aufnehmen. Die dritte Nut 16 ist für die Aufnahme der Klammer 30 gedacht. Während die O-Ringe 15 vor allem abdichtende Funktionen haben, dient die Klammer 30, die im unteren Bildteil auch vergrößert und von der Seite dargestellt ist, der eigentlichen Befestigung des einen Röhrenkollektormoduls 1 an dem anderen Röhrenkollektormodul 1. Mit Hilfe der Klammer 30 werden die Röhrenkollektormodule 1 untereinander gegen ungewolltes Auseinanderziehen gesichert.

In Fig. 5b sind ebenfalls zwei Röhrenkollektormodule 1 dargestellt, die miteinander verbunden sind. Dabei handelt es sich um Röhrenkollektormodule, bei denen das Sammelrohr 2 und das Innenrohr 21 durch Innenhochdruckumformen hergestellt wurde. Das Innenrohr 21 ist gegenüber dem Sammelrohr 2 einerseits über eine kegelförmige Passung 33 abgedichtet und andererseits über eine Verquetschung am entgegengesetzten Ende 34 des Innenrohres abgedichtet. Dadurch bildet das Innenrohr 21 die Einlaufkammer 9. Der Zwischenraum zwischen dem Innenrohr 21 und dem Sammelrohr 2 bildet die Auslaufkammer 10. Auch hier handelt es sich bei dem Verbindungselement 35 zwischen den zwei Röhrenkollektormodulen 1 um eine Doppel-O-Ringsteckverbindung. Das Ende des Sammelrohres 2, an dem sich die kegelförmige Passung 33 des Innenrohres 21 befindet, weist Innennuten 16 zur Aufnahme von O-Ringen auf. Dieses Ende mitsamt den O-Ringen 15 wird auf ein nicht weiter bearbeitetes Sammelrohrende auf der geschlossenen Innenrohrseite eines weiteren Röhrenkollektormoduls 1 aufgeschoben.

Das Innenrohr 21 kann unabhängig von seiner konkreten Ausführungsform am in Strömungsrichtung hinteren Ende eine kleine Öffnung aufweisen, die bei Inbetriebnahme des Kollektors ein schnelleres Entlüften des Röhrenkollektormoduls 1 erlaubt.

## Patentansprüche

1. Röhrenkollektormodul mit einer Sammelanlage (2), das einen Einlauf (9) und einen Auslauf (10) für das Wärmeträgermedium aufweist, und mit mindestens einem koaxial durchflossenen Kollektorrohr (3), das ein Hüllrohr (4), ein Absorberrohr (5) und ein Koaxialrohr (6) aufweist, wobei der Einlauf (9) mindestens ein element (13, 20) zur Aufnahme des Koaxialrohres (6) aufweist **dadurch gekennzeichnet,**
- **dass** der Auslauf (10) mindestens einen, sich in radialer Richtung der Sammelanlage (2) erstreckenden, hohlen Nippel (12) aufweist, auf den das mindestens eine Absorberrohr (5) koaxial aufgesteckt ist, wobei zwischen dem Nippel (12) und dem Absorberrohr (5) mindestens ein Dichtelement (15) angeordnet ist, und
- **dass** das mindestens eine Koaxialrohr (6) koaxial innerhalb des Nippels (12) angeordnet ist und durch ein elastisches Element (11) an dem der Sammelanlage (2) abgewandten Ende des Absorberrohrs (5) gegen das Aufnahmeelement (13, 20) gedrückt ist.

2. Röhrenkollektormodul nach Anspruch 1, **dadurch gekennzeichnet, dass** das elastische Element als Feder (11) ausgebildet ist.

3. Röhrenkollektormodul nach einem der Ansprüche 1 oder 2, **dadurch gekennzeichnet, dass** das mindestens eine Dichtelement als mindestens ein O-Ring (15) ausgebildet ist.

4. Röhrenkollektormodul nach einem der Ansprüche 1 bis 3, **dadurch gekennzeichnet, dass** das mindestens eine Absorberrohr (5) und das mindestens eine Hüllrohr (4) einstückig ausgebildet sind.

5. Röhrenkollektormodul nach einem der Ansprüche 1 bis 4, **dadurch gekennzeichnet, dass** das mindestens eine Absorberrohr (5) und das mindestens eine Hüllrohr (4) aus Glas sind.

6. Röhrenkollektormodul nach einem der Ansprüche 1 bis 5, **dadurch gekennzeichnet, dass** die Sammelanlage als Sammelrohr (2) ausgebildet ist, das mindestens eine Verteilerplatte (7) aufweist, die in Längsrichtung im Sammelrohr (2) angeordnet ist, so dass das Sammelrohr (2) in mindestens eine Einlaufkammer (9) und mindestens eine Auslaufkammer (10) geteilt wird, wobei die Verteilerplatte (7) mindestens ein Element zur Aufnahme des Koaxialrohres (6) aufweist.

7. Röhrenkollektormodul nach Anspruch 6, **dadurch gekennzeichnet, dass** die Verteilerplatte (7) aus Metall ist.

8. Röhrenkollektormodul nach einem der Ansprüche 1 bis 5, **dadurch gekennzeichnet, dass** die Sammelanlage als Sammelrohr (2) ausgebildet ist, das ein koaxial angeordnetes Innenrohr (21) aufweist, so dass das Sammelrohr (2) in mindestens eine Einlaufkammer (9) und eine Auslaufkammer (10) geteilt wird, wobei das Innenrohr (21) mindestens ein Element (13,20) zur Aufnahme des Koaxialrohres (6) aufweist.

9. Röhrenkollektormodul nach Anspruch 8, **dadurch gekennzeichnet, dass** das Innenrohr (21) zylindrisch ausgebildet ist und dessen in Einlaufströmungsrichtung hinteres Ende geschlossen ist.

10. Röhrenkollektormodul nach Anspruch 8 oder 9, **dadurch gekennzeichnet, dass** das Innenrohr (21) an seinem offenen Ende mittels eines Dichtrings (31) gegen das Sammelrohr (2) abgedichtet ist.

11. Röhrenkollektormodul nach einem der Ansprüche 8 bis 10, **dadurch gekennzeichnet, dass** das Innenrohr (21) an seinem geschlossenen Ende relativ zum Sammelrohr (2) mittels eines durchbrochenen Rings (29) zentriert ist.

12. Röhrenkollektormodul nach Anspruch 8, **dadurch gekennzeichnet, dass** das Innenrohr (21) im wesentlichen zylindrisch ausgebildet ist und dessen in Einlaufströmungsrichtung hinteres Ende zusammenläuft, so dass dieses Ende geschlossen ist.

13. Röhrenkollektormodul nach Anspruch 8 oder 12, **dadurch gekennzeichnet, dass** das Innenrohr (21) an seinem offenen Ende mittels einer kegelartigen Passung (33) gegen das Sammelrohr (2) abgedichtet ist.

14. Röhrenkollektormodul nach einem der Ansprüche 8 bis 13, **dadurch gekennzeichnet, dass** das mindestens eine Aufnahmeelement (13,20) als Bohrung mit gewölbter Senkung ausgebildet ist.

15. Röhrenkollektormodul nach einem der Ansprüche 8 bis 13, **dadurch gekennzeichnet, dass** das mindestens eine Aufnahmeelement (13,20) als geöffneter Napf ausgebildet ist.

16. Röhrenkollektormodul nach einem der Ansprüche 1 bis 15, **dadurch gekennzeichnet, dass** es ein Gehäuse (17) aufweist, in dem sowohl die Sammelanlage (2) als auch zum Teil das mindestens eine Kollektorrohr (3) untergebracht sind.

17. Röhrenkollektormodul nach Anspruch 16, **dadurch gekennzeichnet, dass** das Hüllrohr (4) mit dem Gehäuse (17) verbunden ist.

## Claims

1. Tubular collector module with a collecting system (2), the said module having an inflow (9) and an outflow (10) for the heat transfer medium, and with at least one coaxial-throughflow collector tube (3) which has a casing tube (4), an absorber tube (5) and a coaxial tube (6), the inflow (9) having at least one element (13, 20) for receiving the coaxial tube (6),
**characterized**
- **in that** the outflow (10) has at least one hollow nipple (12) which extends in the radial direction of the collecting system (2) and onto which the at least one absorber tube (5) is plugged coaxially, at least one sealing element (15) being arranged between the nipple (12) and the absorber tube (5), and
- **in that** the at least one coaxial tube (6) is arranged coaxially within the nipple (12) and is pressed against the receiving element (13, 20) by an elastic element (11) at that end of the absorber tube (5) which faces away from the collecting system (2).

2. Tubular collector module according to Claim 1,
**characterized**
**in that** the elastic element is designed as a spring (11).

3. Tubular collector module according to either one of Claims 1 and 2,
**characterized**
**in that** the at least one sealing element is designed as at least one O-ring (15).

4. Tubular collector module according to one of Claims 1 to 3,
**characterized**
**in that** the at least one absorber tube (5) and the at least one casing tube (4) are produced in one piece.

5. Tubular collector module according to one of Claims 1 to 4,
**characterized**
**in that** the at least one absorber tube (5) and the at least one casing tube (4) are made from glass.

6. Tubular collector module according to one of Claims 1 to 5,
**characterized**
**in that** the collecting system is designed as a collecting tube (2) which has at least one distributor plate (7) arranged in the longitudinal direction in the collecting tube (2), so that the collecting tube (2) is divided into at least one inflow chamber (9) and at least one outflow chamber (10), the distributor plate (7) having at least one element for receiving the coaxial tube (6).

7. Tubular collector module according to Claim 6,
**characterized**
**in that** the distributor plate (7) is made from metal.

8. Tubular collector module according to one of Claims 1 to 5,
**characterized**
**in that** the collecting system is designed as a collecting tube (2) which has a coaxially arranged inner tube (21), so that the collecting tube (2) is divided into at least one inflow chamber (9) and one outflow chamber (10), the inner tube (21) having at least one element (13, 20) for receiving the coaxial tube (6).

9. Tubular collector module according to Claim 8,
**characterized**
**in that** the inner tube (21) is designed cylindrically and its end which is at the rear in the inflow direction is closed.

10. Tubular collector module according to Claim 8 or 9,
**characterized**
**in that** the inner tube (21) is sealed off at its open end relative to the collecting tube (2) by means of a sealing ring (31).

11. Tubular collector module according to one of Claims 8 to 10,
**characterized**
**in that** the inner tube (21) is centred at its closed end relative to the collecting tube (2) by means of a perforated ring (29).

12. Tubular collector module according to Claim 8,
**characterized**
**in that** the inner tube (21) is designed essentially cylindrically and its end which is at the rear in the inflow direction converges so that this end is closed.

13. Tubular collector module according to Claim 8 or 12,
**characterized**
**in that** the inner tube (21) is sealed off at its open end relative to the collecting tube (2) by means of a cone-like fit (33).

14. Tubular collector module according to one of Claims 8 to 13,
**characterized**
**in that** the at least one receiving element (13, 20) is designed as a bore with a curved countersink.

15. Tubular collector module according to one of Claims 8 to 13,
**characterized**
**in that** the at least one receiving element (13, 20) is designed as an open cup.

16. Tubular collector module according to one of Claims 1 to 15,
**characterized**
**in that** it has a housing (17) which accommodates both the collecting system (2) and, in part, the at least one collector tube (3).

17. Tubular collector module according to Claim 16,
**characterized**
**in that** the casing tube (4) is connected to the housing (17).

## Revendications

1. Module collecteur à tubes comprenant un équipement collecteur (2) qui présente une entrée (9) et une sortie (10) pour le fluide caloporteur et comprenant au moins un tube collecteur (3) traversé par un courant dans le sens coaxial, lequel présente un tube d'enveloppe (4), un tube d'absorption (5) et un tube coaxial (6), l'entrée (9) présentant au moins un élément (13, 20) pour loger le tube coaxial (6), **caractérisé en ce**
- **que** la sortie (10) présente au moins un mamelon creux (12) qui s'étend dans le sens radial de l'équipement collecteur (2) et sur lequel est enfiché de manière coaxiale l'au moins un tube d'absorption (5), au moins un élément d'étanchéité (15) étant disposé entre le mamelon (12) et le tube d'absorption (5), et
- **que** l'au moins un tube coaxial (6) est disposé de manière coaxiale à l'intérieur du mamelon (12) et il est poussé contre l'élément de logement (13, 20) par un élément élastique (11) à l'extrémité du tube d'absorption (5) qui est opposée à l'équipement collecteur (2).

2. Module collecteur à tubes selon la revendication 1, **caractérisé en ce que** l'élément élastique est réalisé sous la forme d'un ressort (11).

3. Module collecteur à tubes selon l'une des revendications 1 ou 2, **caractérisé en ce que** l'au moins un élément d'étanchéité est réalisé sous la forme d'au moins un joint torique (15).

4. Module collecteur à tubes selon l'une des revendications 1 à 3, **caractérisé en ce que** l'au moins un tube d'absorption (5) et l'au moins un tube d'enveloppe (4) sont réalisés d'une seule pièce.

5. Module collecteur à tubes selon l'une des revendications 1 à 4, **caractérisé en ce que** l'au moins un tube d'absorption (5) et l'au moins un tube creux (4) sont en verre.

6. Module collecteur à tubes selon l'une des revendications 1 à 5, **caractérisé en ce que** l'équipement collecteur est réalisé sous la forme d'un tube collecteur (2) qui présente au moins une plaque de distribution (7) qui est disposée dans le sens longitudinal dans le tube collecteur (2) de manière à ce que le tube collecteur (2) soit partagé en au moins une chambre d'entrée (9) et au moins une chambre de sortie (10), la plaque de distribution (7) présentant au moins un élément pour recevoir le tube coaxial (6).

7. Module collecteur à tubes selon la revendication 6, **caractérisé en ce que** la plaque de distribution (7) est en métal.

8. Module collecteur à tubes selon l'une des revendications 1 à 5, **caractérisé en ce que** l'équipement collecteur est réalisé sous la forme d'un tube collecteur (2) qui présente un tube intérieur (21) disposé de manière coaxiale de manière à ce que le tube collecteur (2) soit partagé en au moins une chambre d'entrée (9) et une chambre de sortie (10), le tube intérieur (21) présentant au moins un élément (13, 20) pour recevoir le tube coaxial (6).

9. Module collecteur à tubes selon la revendication 8, **caractérisé en ce que** le tube intérieur (21) est de forme cylindrique et son extrémité arrière dans le sens du courant d'entrée est fermée.

10. Module collecteur à tubes selon la revendication 8 ou 9, **caractérisé en ce que** le tube intérieur (21) est rendu étanche au niveau de son extrémité ouverte par rapport au tube collecteur (2) à l'aide d'une bague d'étanchéité (31).

11. Module collecteur à tubes selon l'une des revendications 8 à 10, **caractérisé en ce que** le tube intérieur (21) est centré au niveau de son extrémité fermée par rapport au tube collecteur (2) au moyen d'une bague percée (29).

12. Module collecteur à tubes selon la revendication 8, **caractérisé en ce que** le tube intérieur (21) est de forme essentiellement cylindrique et son extrémité arrière dans le sens du courant d'entrée se rétrécit de manière à ce que cette extrémité soit fermée.

13. Module collecteur à tubes selon la revendication 8 ou 12, **caractérisé en ce que** le tube intérieur (21) est rendu étanche au niveau de son extrémité ouverte par rapport au tube collecteur (2) à l'aide d'un ajustage conique (33).

14. Module collecteur à tubes selon l'une des revendications 8 à 13, **caractérisé en ce que** l'au moins un élément de logement (13, 20) est réalisé sous la forme d'un orifice à affaissement bombé.

15. Module collecteur à tubes selon l'une des revendications 8 à 13, **caractérisé en ce que** l'au moins un élément de logement (13, 20) est réalisé sous la forme d'un godet ouvert.

16. Module collecteur à tubes selon l'une des revendications 1 à 15, **caractérisé en ce qu'**il présente un boîtier (17) dans lequel sont logés à la fois l'équipement collecteur (2) et en partie aussi l'au moins un tube collecteur (3).

17. Module collecteur à tubes selon la revendication 16, **caractérisé en ce que** le tube d'enveloppe (4) est relié avec le boîtier (17).
